# EUROPÄISCHE PATENTSCHRIFT

(11) **EP 0 868 889 B1**
(45) Veröffentlichungstag und Bekanntmachung des Hinweises auf die Patenterteilung: **04.11.1998**
(21) Anmeldenummer: 97104836.8
(22) Anmeldetag: 21.03.1997
(51) Int. Cl.: A61C 8/00

(54) **Zahnimplantat**
Dental implant
Implant dentaire

(43) Veröffentlichungstag der Anmeldung: 07.10.1998
(73) Patentinhaber: Dinkelacker, Wolfgang, Dr. med. dent., 71063 Sindelfingen (DE)
(72) Erfinder: Dinkelacker, Wolfgang, Dr. med. dent., 71063 Sindelfingen (DE)
(74) Vertreter: Kindermann, Manfred

(56) Entgegenhaltungen:
- WO-A-95/21589
- DE-A-19 509 762
- FR-A- 2 720 624

## Beschreibung

### Bereich der Erfindung

Die Erfindung bezieht sich auf ein enossales Zahnimplantat gemäß dem Oberbegriff von Anspruch 1.

Ein derartiges Zahnimplantat ist aus der FR-A-2 720 624 bekannt.

### Stand der Technik

Es sind Zahnimplantate für einen festsitzenden Zahnersatz bekannt, die aus einem zylindrischen oder konischen Grundkörper bestehen, der an seinem Außendurchmesser eine für das Einwachsen im Kiefer geeignete Ausformung aufweist, wie z.B. eine angerauhte Oberfläche, zylindrische oder konische Gewinde, stufenförmig verlaufende Rillen und dergl. Der Kopf des Implantats ist poliert und besitzt eine zentrale Bohrung, die als Gewindeloch ausgebildet ist und zur Aufnahme eines Gewindebolzens dient, an dem die Zahnkrone befestigt wird (DE 40 28 855 C2, DE 39 17 690 C2). Durch eine mit der Befestigung verbundene Einrichtung, wie z.B. eine vierkantförmige oder elliptische Einlassung, wird die Zahnkrone gegen Verdrehung gesichert. Dabei erfolgt die Abstützung der Zahnkrone auf dem Implantat in einer Ebene. Eine Anpassung des Implantats an den natürlichen Knochenverlauf ist nicht vorgesehen.

Es ist auch bekannt, zwischen Implantatkopf und Zahnkrone eine Distanzhülse anzubringen, die an Ihrem Umfang eine umlaufende Ansatzschulter aufweist, an die sich der untere Rand der Zahnkrone anschließt (DE-A 195 09 762). Die Ansatzschulter verläuft schräg mit einem über ihren Umfang variierenden Abstand zum oberen Ende des Implantatkopfes, um hierdurch und durch entsprechende Wahl der Basishöhe der Ansatzschulter eine verbesserte Anpassung des Überganges zwischen Zahnkrone und Implantat an die anatomischen Gegebenheiten zu erreichen. Hierbei dient die Distanzhülse als Implantatkopf. Sie ist nach unten geschlossen ausgebildet und mittels Gewinde in den Grundkörper des Implantats eingeschraubt und besitzt eine zentrale Gewindebohrung zur Aufnahme des Gewindebolzens, an dem die Zahnkrone befestigt wird. Ein Zentrierbund am unteren Ende der Distanzhülse ist mit vertikalen Vorsprüngen versehen, die in entsprechende Ausnehmungen des Grundkörpers eingreifen und zur Ausrichtung der Zahnkrone und Sicherung derselben gegen Verdrehung dienen. Auch bei dieser Einrichtung erfolgt die Abstützung der Zahnkrone in einer Ebene ohne Anpassung an den natürlichen Knochenverlauf.

Die französische Patentanmeldung FR 2 720 624 A (Brunet) zeigt ein Zahnimplantat, das aus einem zylindrischen Körper besteht, der an seinem oberen Ende durch zwei zueinander geneigte Flächen begrenzt ist, die eine dachfirstartig verlaufende spitze Kante bilden und einen entsprechend angepaßten Schaft tragen, der in die Zahnkrone ragt. Mittels eines schräg durch die Zahnkrone und den Schaft geführten Schraubenbolzens wird die Zahnkrone fixiert und gegen Verdrehung gesichert. Die geneigten Flächen dienen zum genauen Positionieren der auf das Implantat aufzusetzenden Teile einschließlich der Zahnkrone und gestatten ein sicheres Repositionieren nach wiederholtem Abnehmen und Wiederaufsetzen dieser Teile. Bei dieser Anordnung liegen die Auslaufkanten der geneigten Flächen bis hin zur spitzen Oberkante außerhalb des Kieferknochens. Eine anatomische Anpassung des Implantatkopfes an den Verlauf des Kieferknochens ist nicht vorgesehen. Stattdessen verläuft der untere Rand des Zahnersatzes am Fuße der geneigten Flächen auf gleichem Niveau zirkular um das Implantat. Ebenso weist die Basis der Zahnkrone keinen fließenden Übergang zum Implantatkopf auf.

Die Erfindung zeichnet sich durch die in Anspruch 1 ausgegebenen Merkmale aus.

Das erfindungsgemäße Zahnimplantat sieht eine zweiseitige Verjüngung des Kopfteils vor, die durch beiderseits der Gewindebohrung zu den Rändern des Kieferknochens hin abfallende Abschrägungen gebildet wird. Die Abschrägungen bilden von den Randbereichen einer Stirnfläche des Kopfteils ausgehende Schnittlinien mit dem Umfang des Kopfteils, die auf variabler Höhe verlaufen und dem Verlauf der Oberkanten des Kieferknochens entsprechen. Ein mit der Zahnkrone verbundener Kontaktkörper ist der Verjüngung am oberen Ende des Implantatkopfes angepaßt.

Die zweiseitige Verjüngung kann asymmetrisch ausgebildet sein. Hierzu befindet sich auf der Lingualseite des Kopfteils eine flachere Abschrägung und auf der Buccalseite des Kopfteils eine steilere Abschrägung. Die Schnittlinien der unterschiedlichen Abschrägungen mit dem Umfang des Kopfteils verlaufen bei dieser Ausführungsform auf den beiden Seiten in unterschiedlichen Höhen entsprechend dem Verlauf des Kieferknochens.

Das Implantat nach der Erfindung gestattet eine verbesserte Anpassung an die Anatomie des Kieferknochens als auch des darüber liegenden Weichgewebes. Durch die Form des Implantats wird eine Anpassung an die Niveauunterschiede zwischen den Buccal- und Lingualhöhen und der Approximalhöhe des Knochenverlaufs erreicht und eine natürliche Oberkante des Kieferknochens nachgebildet. Ein Abtragen von Knochengewebe zur Herstellung einer einheitlichen Basis für das Aufbausystem kann vermieden und der natürliche Knochenverlauf kann weitgehend erhalten werden und beim Einheilen des Implantats nachwachsen. Zum anderen bestimmt der natürliche Knochenverlauf den natürlichen Weichgewebeverlauf, so daß es zur Ausbildung einer interimplantären Papillenstruktur kommt.

Die an die Niveauunterschiede im Knochenverlauf angepaßte Form des Implantatkopfes vermeidet zirkuläre Entzündungen. Die Osteolyse entsteht auf unterschiedlichem Niveau, wie dies auch beim normalen Zahn der Fall ist.

Die Anordnung hat des weiteren eine günstige Auswirkung auf die gesteuerte Knochenregeneration bei Anwendung der Membrantechnik. Durch den verjüngten Implantatkopf schmiegt sich die Membran dem Verlauf des Implantatkopfes an, und es wird eine Faltenbildung beim Anlegen der Membran vermieden.

Die der Zahnkrone zugewandte Oberfläche des Kontaktkörpers entspricht in ihrem Verlauf dem Kopfteil und weist in komplementärer Form entsprechende Abschrägungen auf. Es wird dadurch ein vereinfaches Aufbausystem mit integrierter Sicherung gegen Verdrehung erhalten, das eine verbesserte mechanische Stabilität sowohl in buccaler als auch in lingualer Richtung besitzt. Die Abschrägungen am Implantatkopf und die entsprechenden Abschrägungen am Kontaktkörper nehmen die auf das Implantat einwirkenden seitlichen Kräfte auf und verhindern das Auftreten von Scherkräften im Bereich der Befestigungsschraube.

### Beschreibung der Zeichnungen

Nachfolgend sind verschiedene Ausführungsformen der Erfindung anhand von Zeichnungen beschrieben. Es zeigen:
- Figur 1: eine Ausführungsbeispiel des Zahnimplantats gemäß der Erfindung in einer Schnittdarstellung mit entlang der Längsachse des Zahnimplantats verlaufender Schnittlinie;
- Figur 2: eine andere Schnittdarstellung des Zahnimplantats von Figur 1 mit einem um 90 Grad versetzten Verlauf der Schnittlinie;
- Figur 3: eine Ansicht des Implantatkörpers 1 von der Lingualseite;
- Figur 4: eine Ansicht des Implantatkörpers 1 von der Buccalseite;
- Figur 5: eine Draufsicht auf den Implantatkopf nach den Figuren 3 und 4;
- Figur 6: einen Schnitt nach Linie A-A in Figur 2;
- Figur 7: einen Schnitt nach Linie B-B in Figur 2;
- Figur 8: eine Ansicht auf den Kontaktkörper 10 aus Richtung C in Figur 2;
- Figur 9: eine Ansicht auf den Kontaktkörper 10 aus Richtung D in Figur 2;
- Figur 10: eine Ansicht einer natürlichen Zahnanordnung;
- Figur 11: eine Ansicht eines herkömmlichen Impantatsystems;
- Figur 12: eine Ansicht eines Impantatsystems gemäß der Erfindung;
- Figur 13: eine Teilansicht des Implantatkopfes einer alternativen Ausführungsform der Erfindung;
- Figur 14: eine Draufsicht auf eine weiteren Ausführungsform des Implantatkopfes gemäß der Erfindung;
- Figur 15: eine Teilschnitt des Kontaktkörpers einer weiteren Ausführungsform der Erfindung; und
- Figur 16: ein Draufsicht auf die Anordnung in Figur 15.

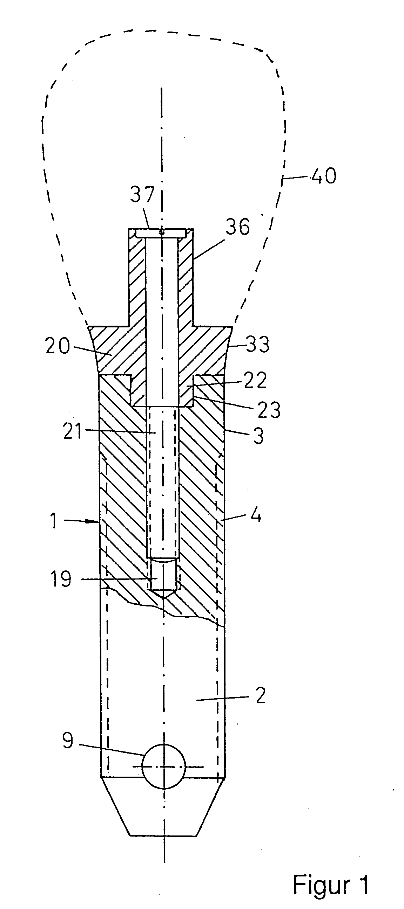

### Detaillierte Beschreibung des in den Figuren 1 bis 9 dargestellten Ausführungsbeispiels

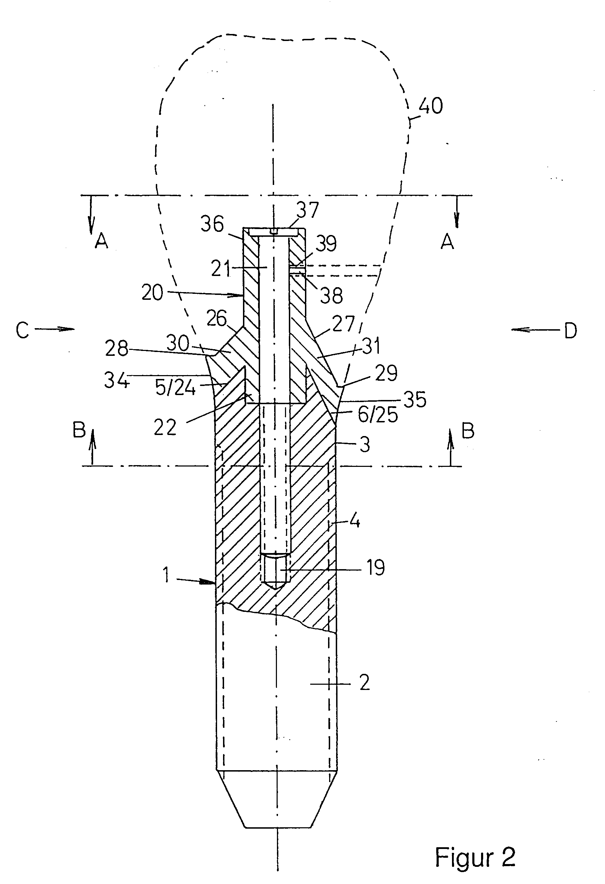

Das dargestellte Ausführungsbeispiel zeigt ein enossales Zahnimplantat, das einen zylinderförmigen Implantatkörper 1 aufweist, der aus einer Implantatwurzel 2 und einem Implantatkopf 3 besteht. Implantatkopf 3 und Implantatwurzel 2 können einstückig ausgebildet sein, wie in den Figuren dargestellt, oder aus zwei Teilen bestehen, die in geeigneter Weise miteinander verbunden sind. Die Implantatwurzel 2 ist an ihrem Umfang mit einem Gewinde 4 versehen, mit dem das Implantat in ein vorgebohrtes Loch im Kieferknochen eingeschraubt wird. Ein Durchbruch 9 am unteren Ende der Implantatwurzel 2 dient zum besseren Einheilen des Implantats im Knochen. Im eingesetzten Zustand verläuft der obere Rand des Kieferknochens im Bereich des Implantatkopfes 3. Wie die Figuren 2 bis 5 zeigen, weist der Implantatkopf 3 an seinem oberen Ende eine zweiseitige Verjüngung auf, die durch Abschrägungen 5 und 6 gebildet wird. Durch diese Ausgestaltung wird das obere Ende des Implantatkopfes 3 an den Verlauf des Kieferknochens angepaßt.

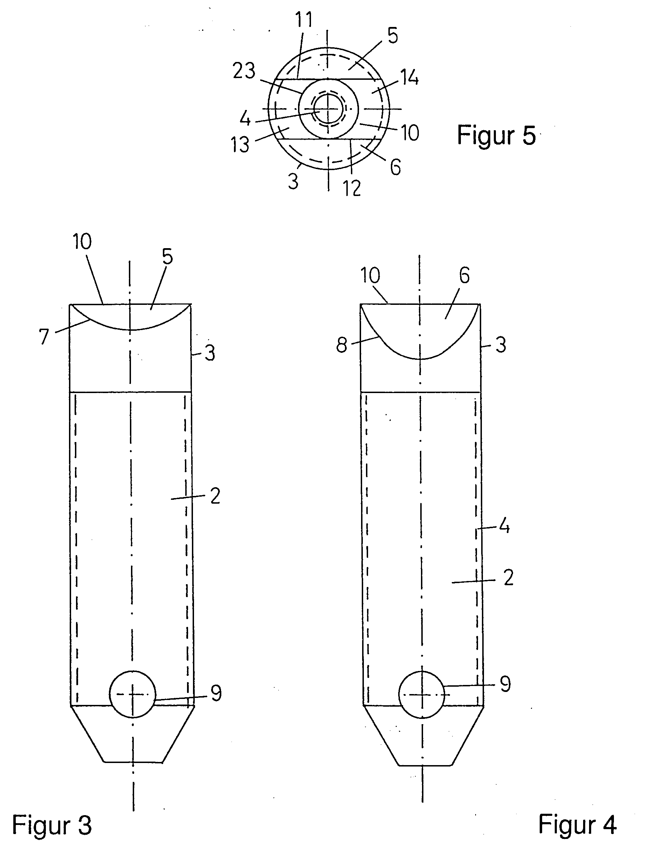

Die Abschrägungen 5 und 6 sind asymmetrisch ausgebildet. Hierzu verläuft die sich auf der Lingualseite des eingesetzten Implantats befindliche Abschrägung 5 in einem flacheren Winkel als die ihr gegenüberliegende Abschrägung 6. Die Abschrägung 6 weist somit einen spitzeren Winkel zur Langsachse des Implantatkörpers 1 auf als die Abschrägung 5, wodurch bogenförmige Schnittlinien 7 und 8 mit dem zylindrischen Umfang des Kopfteils 3 erhalten werden, die auf den beiden Seiten des Implantatkopfes 3 in unterschiedlicher Höhe verlaufen (Figuren 3 und 4). Auf diese Weise kann der der Zahnkrone zugewandte Rand des Implantats weitgehend dem unterschiedlichen Verlauf des Kieferknochenrandes auf der Lingual- und Buccalseite angepaßt werden.

Aus der Draufsicht von Figur 5 ist ersichtlich, daß die Abschrägungen 5, 6 mit der Stirnfläche 10 des Implantatkopfes geradlinige Oberkanten 11, 12 bilden. Im eingesetzten Zustand des Implantats liegen die Randbereiche 13 und 14 der Stirnfläche 10 etwa auf der Höhe des oberen Kieferknochenrandes zwischen benachbarten Zähnen und damit in unterschiedlichem Abstand zu den die Unterkanten der Abschrägungen 5, 6 bildenden Schnittlinien 7, 8.

Nach der Einheilphase wird auf den Implantatkopf 3 ein Kontaktkörper 20 aufgesetzt und in dieser Position von einem Gewindebolzen 21 gehalten, der in eine konzentrische Gewindebohrung 19 in der Implantatwurzel 2 eingeschraubt wird (Figuren 1 und 3). Der Kontaktkörper 20 besitzt ein Führungteil 22, das im Ausführungsbeispiel als Zylinder ausgebildet ist, der in eine entsprechende Ausnehmung 23 im Implantatkopf 3 eingreift. Die Unterseite des Kontaktkörpers 20 ist an die asymmetrische Form des Implantatkopfes komplementär angepaßt. Zu diesem Zweck weist der Kontaktkörper 20 beiderseits des Führungszylinders 22 schräge Flächen 24, 25 auf, die den Abschrägungen 5 und 6 am Implantatkopf 3 entsprechen und auf diesen formschlüssig aufliegen. Die Flächen 24, 25 dienen zugleich als Sicherung gegen eine axiale Verdrehung des Kontaktkörpers 20 gegenüber dem Implantatkörper 1.

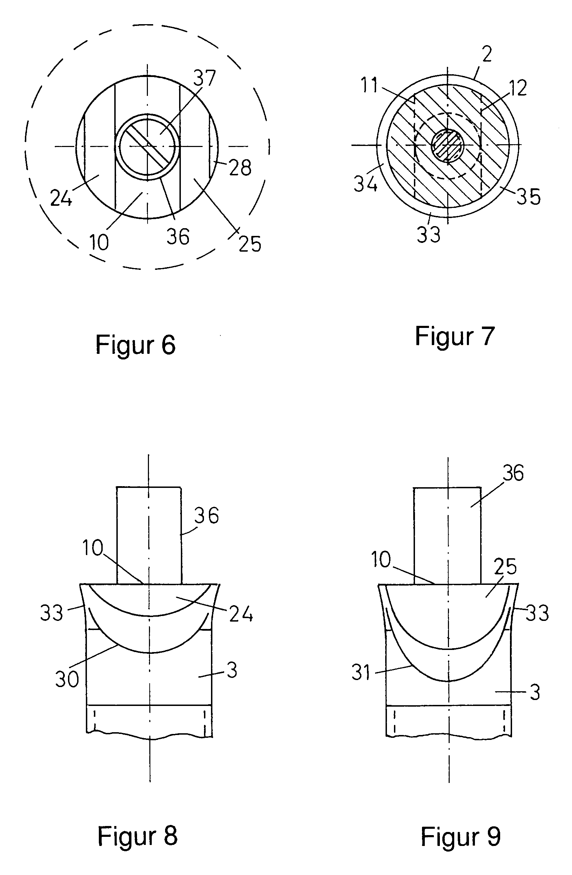

In entsprechender Weise ist auch die Oberseite des Kontaktkörpers ausgebildet. Schräge obere Flächen 26, 27 gleichen in ihrer Winkellage den schrägen unteren Flächen 24, 25. Das äußere Ende der Flächen 26 läuft in einen horizontalen Kragen 28 aus. Ein entsprechender Kragen 29 befindet sich auch am äußeren Ende der schrägen Fläche 27. Die Flächen 24 und 26 begrenzen eine schräg abfallende Schürze 30 (Figur 8), und die Flächen 25 und 27 begrenzen eine schräg abfallende Schürze 31 (Figur 9). Die Schürzen 30, 31 laufen in den zylindrischen Teil 33 des Kontaktkörpers 20 unterhalb der Randbereiche 13, 14 der Stirnfläche 10 aus. Der Umfang des Kontaktkörpers 20 vergrößert sich nach oben kegelförmig, wobei der Umfang 33 ein leicht konkaves Profil aufweist. Ebenso vergrößert sich der Umfang des Kontaktkörpers 20 im Bereich der Schürzen 30, 31 nach oben mit einem leicht konkaven Profil 34, 35, das kantenlos in den Umfang 33 des Kontaktkörpers 20 übergeht.

An das leicht konkave Profil 33, 34, 35 schließt sich die Kontur einer Zahnkrone 40 absatz- und fugenlos an. Die Zahnkrone 40 ist an ihrer Unterseite an die Form des Kontaktkörpers 20 angepaßt und wird auf diesem befestigt. Eine Verlängerung 36 des Kontaktkörpers 20, die an ihrem oberen Ende eine flache Vertiefung zur Aufnahme des Schraubenkopfes 37 am Bolzen 21 aufweist, dient zur Ausrichtung und Halterung der Zahnkrone 40. Die Verlängerung 36 kann die Form eines Zylinders haben, wie in den Zeichnungen dargestellt, oder eine andere geeignet Form aufweisen wie z.B. die Form eines spitzen Konus. Die Befestigung der Zahnkrone 40 auf dem Kontaktkörper 20 erfolgt durch Aufzementieren und/oder durch eine transversale Schraube 38, die durch eine Bohrung in der Zahnkrone geführt ist und in eine seitliche Gewindebohrung 39 in der Verlängerung 36 des Kontaktkörpers 20 eingreift.

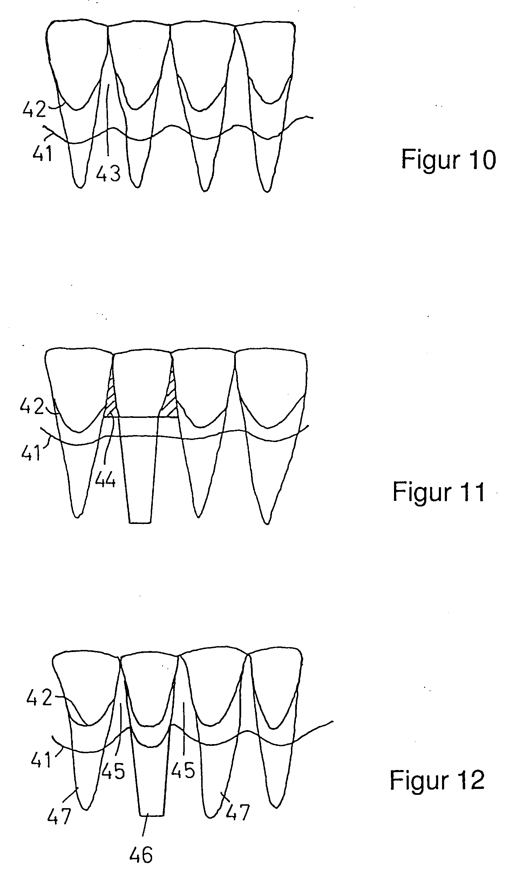

Die Dicke der Schürzen 30, 31 ist so bemessen, das sie annähernd der Dicke des Weichgewebes entsprechen, das sich auf dem Kieferknochen bildet. Hierdurch wird auch im Bereich des Weichgewebes eine Anpassung an die anatomischen Verhältnisse erreicht. Der Weichgewebeverlauf wird durch den natürlichen Knochenverlauf bestimmt, dem der Implantatkopf durch die zweiseitig verjüngte Ausbildung des Kopfteils angepaßt ist, so daß es postoperativ auch zur Ausbildung einer interimplantären Papillenstruktur kommt. Die Figur 10 zeigt den Knochenverlauf 41 und den Zahnfleischverlauf 42 sowie die Interdentalpapillen 43 bei einer natürlichen Zahnanordung. Die entsprechende Ansicht einer Zahnanordnung mit einem herkömmlichen Implantatsystem zeigt in den Bereichen 44 zwischen Implantat und den benachbarten natürlichen Zähnen den Verlust der Interdentalpapillen. Die Figur 12 zeigt das Implantatsystem gemäß Figuren 1 bis 8 mit zwischen Implantat 46 und den benachbarten natürlichen Zähnen 47 befindlichen Interdentalpapillen 45, die sich durch die Niveauanpassung am natürlichen Knochen- und Weichgewebeverlauf ausbilden.

### Alternative Ausführungsformen

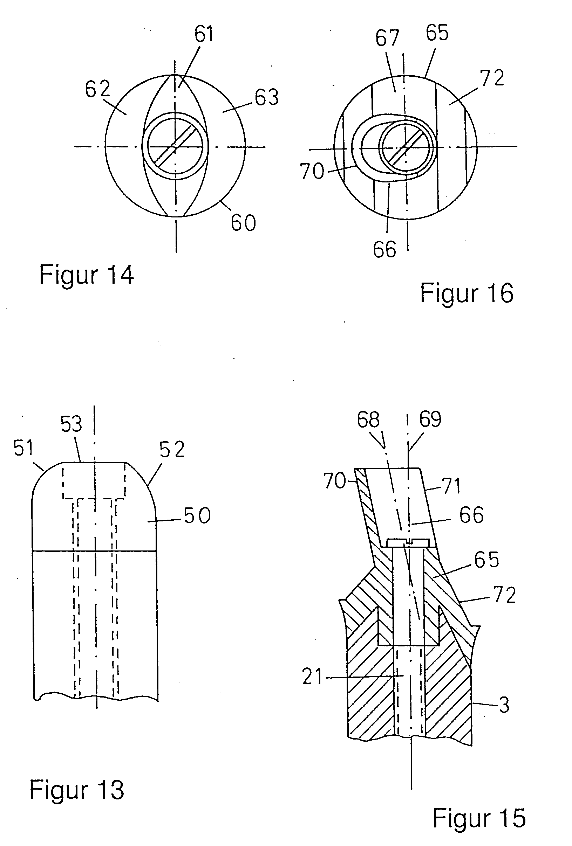

Die Figuren 13 bis 16 zeigen alternative Ausführungsformen der Erfindung. Bei der Ausführungsform nach Figur 13 wird die asymmetrische Verjüngung des Implantatkopfes 50 an dessen oberen Ende durch abgeschrägte, konvex gewölbte Teilflächen 51 und 52 erreicht, die kantenlos in die Stirnfläche 53 des Implantatkopfes übergehen. Der zu dieser Ausführung gehörende nicht dargestellte Kontaktkörper ist wie oben erläutert an Unter- und Oberseite der Form des Implantatkopfes 50 angepaßt.

Aus Figur 14 ist ersichtlich, daß bei einer weiteren Ausführungsform der Erfindung der Implantatkopfes 60 an seinem oberen Ende eine Stirnfläche 61 mit einer annähernd elliptischen Form aufweist, die sich aus einem konvexen Verlauf der asymmetrisch abgeschrägten Flächen 62 und 63 in radialer Richtung ergibt. Auf diese Wiese ist eine Anpassung an besondere anatomische Verhältnisse am oberen Rand des Kieferknochens möglich. Auch bei dieser Ausführungsform ist der dazu gehörende, nicht dargestellte Kontaktkörper an Unter- und Oberseite der Form des Implantatkopfes 60 angepaßt.

Der zur Halterung der Zahnkrone dienende Oberteil des Kontaktkörpers ist jeweils an die Achsrichtung der Zahnkrone anzupassen. Die Figuren 15 und 16 zeigen eine Ausführungsform, bei der eine nach oben ragende Verlängerung 66 eines Kontaktkörper 65 in Richtung einer Zahnkronenachse 68 in einem spitzen Winkel zur Achse 69 des Implantatkörpers abgewinkelt ist. Die Verlängerung 66 ist ein auf die Stirnfläche 67 des Kontaktkörpers 65 aufgesetzter, konzentrisch zur Zahnkronenachse 68 ausgebildeter Friktionskörper 70, der zur Achse 69 hin offen ist und eine Schräge 71 aufweist, die in die schräge Fläche 72 auf der Buccalseite des Kontaktkörpers 65 ausläuft. Die Zahnkrone wird in Richtung der Achse 68 auf dem Kontaktkörper 65 befestigt. Beliebige andere Formen der nach oben ragenden Verlängerung des Kontaktkörpers sind möglich.

## Patentansprüche

1. Enossales Zahnimplantat mit einem rotationssymmetrisches Unterteil (2) und einem Kopfteil (3), das eine Gewindebohrung (19) und am oberen Ende Abschrägungen (5, 6, 62, 63) in Form zueinander geneigter Flächen aufweist, mit einem Kontaktkörper (20), der mit einer Zahnkrone (40) zu verbinden ist, der zum Aufsetzen auf das Kopfteil (3) an seiner Unterseite (24, 25) an die zueinander geneigten Flächen angepaßt ist und der von einer gleichachsig mit der Gewindebohrung (19) verlaufenden Bohrung durchsetzt ist zur Aufnahme einer Befestigungsschraube (21),
dadurch gekennzeichnet,
(a) daß das Kopfteil (3) eine Stirnfläche (10) aufweist, die vom Umfang und den Abschrägungen des Kopfteils begrenzt wird, und daß die Gewindebohrung (19) von der Stirnfläche (10) ausgeht, zum Unterteil des Implantats axial verläuft, und zur Aufnahme der Befestigungsschraube für den an die Stirnfläche und die Abschrägungen angepaßten Kontaktkörper (20) dient;
(b) daß beiderseits der Gewindebohrung (19) befindliche Randbereiche (13, 14) der Stirnfläche als Basisniveau für die Implantatposition und die Zahnkrone dienen; und
(c) daß von den Randbereichen (13, 14) ausgehende Schnittlinien (7, 8) der Abschrägungen mit dem Umfang des Kopfteils auf einem variablen Niveau verlaufen, das bezüglich seiner Höhenlage dem Verlauf des Kieferknochens anpaßbar ist.

2. Implantat nach Anspruch 1, dadurch gekennzeichnet, daß die Abschrägungen (5, 6, 62, 63) asymmetrisch ausgebildet sind und in unterschiedlichen Winkeln zur Implantatachse verlaufen, von denen die steilere zur Anordnung auf der Buccalseite des Implantats bestimmt ist, daß die asymmetrischen Abschrägungen auf den gegenüberliegenden Seiten des Kopfteils über dessen Umfang in unterschiedlichen Höhen verlaufende Auslaufkanten (7, 8) bilden, und daß der Kontaktkörper (20) an seiner Unterseite (24, 25) der asymmetrischen Form des Kopfteils angepaßt ist.

3. Implantat nach Anspruch 1, dadurch gekennzeichnet, daß die Abschrägungen (5, 6) ebene Flächen sind.

4. Implantat nach Anspruch 1, dadurch gekennzeichnet, daß die Abschrägungen in Achsrichtung konvex ausgebildete Flächen (51, 52) sind.

5. Implantat nach Anspruch 1, dadurch gekennzeichnet, daß die Abschrägungen in radialer Richtung konvex ausgebildete Flächen (62, 63) sind, die an ihren Oberkanten eine annähernd elliptische Stirnfläche (61) des Implantatkopfes (60) bilden.

6. Implantat nach Anspruch 1, dadurch gekennzeichnet, daß der Kontaktkörper (20, 65) an seiner Oberseite eine zweiseitige Verjüngung aufweist, die in ihrer Form den Abschrägungen (5, 6, 62, 63) des Kopfteils entspricht und an die die Zahnkrone (40) angepaßt wird.

7. Implantat nach Anspruch 2, dadurch gekennzeichnet, daß der Kontaktkörper (20) an seiner Oberseite in Bezug auf die Implantatachse asymmetrisch angeordnete Abschrägungen (26, 27) aufweist, die in ihrer Winkellage wenigstens annähernd den asymmetrischen Abschrägungen (5, 6) am Implantatkopf (3) angepaßt sind.

8. Implantat nach Anspruch 7, dadurch gekennzeichnet, daß asymmetrische Flächen (24, 26 und 25, 27) auf der Unterseite und auf der Oberseite des Kontaktkörpers (20) unterschiedlich geneigte Schürzen (30, 31) bilden und daß die zur Anordnung auf der Buccalseite des Implantats bestimmte Schürze (31) einen spitzeren Neigungswinkel zur Implantatachse aufweist als die auf der gegenüberliegenden Seite befindliche Schürze (30).

9. Implantat nach Anspruch 1, dadurch gekennzeichnet, daß die Abschrägungen (26, 27) an ihren unteren Rändern jeweils einen schmalen, gegenüber der Implantatachse wenigstens annähernd rechtwinklig verlaufenden Kragen (28, 29) aufweisen.

10. Implantat nach Anspruch 1, dadurch gekennzeichnet, daß der Kontaktkörper (20) ein sich zur Zahnkrone (40) hin kegelförmig vergrößerndes Umfangsprofil (33, 34, 35) aufweist zur Vergrößerung der Basis für die Aufnahme der Zahnkrone und zur stufenlosen Anpassung an den Umfang der Zahnkrone.

11. Implantat nach den Ansprüchen 8 und 10, dadurch gekennzeichnet, daß der sich vergrößernde Umfang des Kontaktkörpers (20) eine konkave Wölbung aufweist, die sich auch über den Umfangsbereich der Schürzen (30, 31) erstreckt.

12. Implantat nach Anspruch 1, dadurch gekennzeichnet, daß der Kontaktkörper (20) eine zentrale Bohrung zur Aufnahme der Befestigungsschraube (21) und ein Führungsteil (22) aufweist, das in eine komplementäre Ausnehmung (23) im Implantatkörper (1) eingepaßt ist.

13. Implantat nach Anspruch 1, dadurch gekennzeichnet, daß der Kontaktkörper (20) eine Verlängerung (36) nach oben aufweist, die zur Befestigung der Zahnkrone dient.

14. Implantat nach Anspruch 13, dadurch gekennzeichnet, daß die Verlängerung (36) des Kontaktkörpers (20) als konzentrisch zur Implantatachse angeordneter Zylinder ausgebildet ist.

15. Implantat nach Anspruch 13, dadurch gekennzeichnet, daß die Verlängerung (36) des Kontaktkörpers (20) als konzentrisch zur Implantatachse angeordneter Konus ausgebildet ist.

16. Implantat nach Anspruch 13, dadurch gekennzeichnet, daß die Verlängerung (36) des Kontaktkörpers (20) zur Aufnahme einer transversalen Schraube (38) zur Befestigung der Zahnkrone ausgebildet ist.

17. Implantat nach Anspruch 13, dadurch gekennzeichnet, daß die Verlängerung (66) des Kontaktkörpers (65) in einem spitzen Winkel zur Implantatachse (69) verläuft, der an die Achslage (68) einer schräg auf den Implantatkörper aufgesetzten Zahnkrone angepaßt ist.

18. Implantat nach Anspruch 17, dadurch gekennzeichnet, daß die Verlängerung (66) des Kontaktkörpers (65) als ein von der Stirnfläche (67) des Kontaktkörpers (65) konzentrisch zur Zahnkronenachse (68) nach oben ragender Friktionskörper (70) ausgebildet ist, der zur Implantatachse (69) hin offen ist.

## Claims

1. Enosseous dental implant with a rotationally symmetrical bottom part (2) and a head part (3) which has a threaded bore (19) and on its upper end it has bevels (5, 6, 62, 63) in the form of faces inclined toward one another, with a contact body (20) which is connected to a dental crown (40) which is adapted to the inclined faces on its lower side (24, 25) for attaching the head part (3), and which has a bore going through it coaxial with the threaded bore (19) to accommodate a fastening screw (21),
characterized in that
(a) the head part (3) has an end face (10) which is bordered by the periphery and the bevels of the head part, and the threaded bore (19) emanates from the end face (10), extends axially toward the bottom part of the implant and serves to accommodate the fastening screw for the contact body (20) adapted to the end face and the bevels;
(b) edge areas (13, 14) of the end face on both sides of the threaded bore (19) serve as a base level for the position of the implant and the crown; and
(c) lines of intersection (7, 8) of the bevels emanating from the edge areas (13, 14) with the periphery of the head part extends on a variable level which with respect to its height is adaptable to the shape of the jaw bone.

2. Implant according to claim 1, characterized in that the bevels (5, 6, 62, 63) are asymmetrically shaped and extends at different angles to the implant axis, the steeper of which is determined for being positioned on the buccal side of the implant, the asymmetrical bevels on the opposite sides of the head part form trailing edges (7, 8) which extend at different heights over its circumference, and the contact body (20) is adapted at its lower side (24, 25) to the asymmetrical shape of the head part.

3. Implant according to Claim 1, characterized in that the bevels (5, 6) are flat faces.

4. Implant according to Claim 1, characterized in that the bevels are convex faces (51, 52) in the axial direction.

5. Implant according to Claim 1, characterized in that the bevels are faces (62, 63) designed to be convex in the radial direction and form an approximately elliptical end face (61) on the implant head (60) at its upper edges.

6. Implant according to Claim 1, characterized in that the contact body (20, 65) has on its top side a two-sided taper which corresponds in shape to the bevels (5, 6, 62, 63) of the head part and to which the crown (40) is adapted.

7. Implant according to Claim 2, characterized in that the contact body (20) has on its top side bevels (26, 27) arranged asymmetrically with respect to the implant axis, adapted in the angular position at least approximately to the asymmetrical bevels (5, 6) on the implant head (3).

8. Implant according to Claim 7, characterized in that asymmetrical faces (24, 26 and 25, 27) on the bottom side and on the top side of the contact body (20) form aprons (30, 31) of different inclinations, and the apron (31) intended for arrangement on the buccal side of the implant has a more acute angle of inclination to the implant axis than the apron (30) on the opposite side.

9. Implant according to Claim 1, characterized in that the bevels (26, 27) have a narrow collar (28, 29) running at least approximately at a right angle with respect to the axis of the implant on their lower edges.

10. Implant according to Claim 1, characterized in that the contact body (20) has a peripheral profile (33, 34, 35) which becomes larger in a conical shape toward the crown (40) to increase the base for accommodating the crown and for smooth adaptation to the periphery of the crown.

11. Implant according to Claims 8 and 10, characterized in that the increasing periphery of the contact body (20) has a concave curvature which also extends over the peripheral area of the aprons (30, 31).

12. Implant according to Claim 1, characterized in that the contact body (20) has a central bore to accommodate the fastening screw (21) and a guide part (22) which is adapted to a complementary recess (23) in the implant body (1).

13. Implant according to Claim 1, characterized in that the contact body (20) has an extension (36) upward that serves to secure the crown.

14. Implant according to Claim 13, characterized in that the extension (36) of the contact body (20) is designed as a cylinder concentric with the axis of the implant.

15. Implant according to Claim 13, characterized in that the extension (36) of the contact body (20) is designed as a cone arranged to be concentric with the axis of the implant.

16. Implant according to Claim 13, characterized in that the extension (36) of the contact body (20) is designed to accommodate a transverse screw (38) for attaching the crown.

17. Implant according to Claim 13, characterized in that the extension (66) of the contact body (65) extends at an acute angle to the axis (69) of the implant which angle is adapted to the axial position (68) of a crown inclinedly attached to the implant body.

18. Implant according to Claim 17, characterized in that the extension (66) of the contact body (65) is designed as a friction body (70) which is concentric with the axis (68) of the crown, projecting upward from the end face (67) of the contact body (65) and which is open toward the axis (69) of the implant.

## Revendications

1. Implant dentaire endo-osseux, comprenant une partie inférieure (2) à symétrie de révolution, et une partie tête (3) qui présente un alésage fileté (19) et, a l'extrémité supérieure, des chanfreins (5, 6, 62, 63) en forme de faces inclinées les unes vers les autres, avec un corps de contact (20) qui doit être raccordé à une couronne dentaire (40) et qui est adapté aux faces inclinées l'une vers l'autre, sur sa face inférieure (24, 25), en vue d'être posé sur la partie tête (3), et qui est traversé par un alésage de même axe que l'alésage fileté (19), pour loger une vis de fixation (21), caractérisé en ce que
(a) la partie tête (3) présente une face frontale (10) qui est délimitée par le pourtour et les chanfreins de la partie tête, en ce que l'alésage fileté (19) part de la face frontale (10) et sert à loger la vis de fixation pour le corps de contact (20) adapté à la face frontale et aux chanfreins;
(b) des zones de bordure (13, 14) de la face frontale se trouvant de part et d'autre de l'alésage fileté (19) servent de niveau de base pour la position de l'implant et la couronne dentaire; et
(c) des lignes de coupure (7, 8) des chanfreins partant des zones de bordure (13, 14) se situent à un niveau variable de la périphérie de la partie tête, par rapport à la position en hauteur de cette dernière, niveau qui peut être adapté au profil de l'os maxillaire.

2. Implant selon la revendication 1, caractérisé en ce que les chanfreins (5, 6, 62, 63) sont asymétriques et présentent des angles différents par rapport à l'axe de l'implant, l'angle le plus abrupt étant destiné à être placé du côté buccal de l'implant, en ce que les chanfreins asymétriques forment, sur les côtés opposés de la partie tête, des bords de fuite (7, 8), à des hauteurs différentes sur le pourtour de celle-ci, et en ce que le corps de contact (20) est adapté, au niveau de sa face inférieure, à la forme asymétrique de la partie tête.

3. Implant selon la revendication 1, caractérisé en ce que les chanfreins (5, 6) sont des surfaces planes.

4. Implant selon la revendication 1, caractérisé en ce que les chanfreins sont des surfaces (51, 52) de forme convexe dans le sens de l'axe.

5. Implant selon la revendication 1, caractérisé en ce que les chanfreins sont des faces (62, 63) présentant une convexité dans le sens radial et formant, sur leurs bords supérieurs, une face frontale (61) à peu près ellipsoïdale de la tête d'implant (60).

6. Implant selon la revendication 1, caractérisé en ce que le corps de contact (20, 65) présente, sur sa face supérieure, un effilement bilatéral qui correspond, quant à sa forme, aux chanfreins (5, 6, 62, 63) de la partie tête et auquel est adaptée la couronne dentaire (40).

7. Implant selon la revendication 2, caractérisé en ce que sur sa face supérieure, le corps de contact (20) présente des chanfreins (26, 27) disposés de manière asymétrique par rapport à l'axe de l'implant, lesquels sont adaptés, au moins approximativement, quant à leur position angulaire, aux chanfreins (5, 6) asymétriques prévus sur la tête d'implant (3).

8. Implant selon la revendication 7, caractérisé en ce que des surfaces asymétriques (24, 26 et 25, 27) forment, sur la face inférieure et la face supérieure du corps de contact (20), des jupes (30, 31) d'inclinaisons différentes, et en ce que la jupe (31) destinée à être placée du côté buccal de l'implant présente un angle d'inclinaison plus plat, par rapport à l'axe de l'implant, que la jupe (30) se trouvant du côté opposé.

9. Implant selon la revendication 1, caractérisé en ce que les chanfreins (26, 27) présentent chacun, sur leur bords inférieurs, un rebord (28, 29) étroit, qui décrit au moins un angle à peu près droit avec l'axe de l'implant.

10. Implant selon la revendication 1, caractérisé en ce que le corps de contact (20) présente un profil périphérique (33, 34, 35) qui s'élargit en cône en direction de la couronne dentaire (40), pour agrandir la base destinée à accueillir la couronne dentaire et pour s'adapter, de façon non graduelle, au pourtour de la couronne dentaire.

11. Implant selon les revendications 8 et 10, caractérisé en ce que le pourtour du corps de contact (20) qui va en s'élargissant présente une concavité qui s'étend aussi au-delà de la zone périphérique des jupes (30, 31).

12. Implant selon la revendication 1, caractérisé en ce que le corps de contact (20) présente un alésage central destiné à loger la vis de fixation (21) et une pièce de guidage (22) qui est engagée dans un évidement (23) complémentaire ménagé dans le corps d'implant (1).

13. Implant selon la revendication 1, caractérisé en ce que le corps de contact (20) présente un prolongement (36) vers le haut, qui sert à la fixation de la couronne dentaire.

14. Implant selon la revendication 13, caractérisé en ce que le prolongement (36) du corps de contact (20) est réalisé sous forme de cylindre disposé coaxialement à l'axe de l'implant.

15. Implant selon la revendication 13, caractérisé en ce que le prolongement (36) du corps de contact (20) est réalisé sous forme de cône disposé coaxialement à l'axe de l'implant.

16. Implant selon la revendication 13, caractérisé en ce que le prolongement (36) du corps de contact (20) est configuré de manière à loger une vis transversale (38) servant à fixer la couronne dentaire.

17. Implant selon la revendication 13, caractérisé en ce que le prolongement (66) du corps de contact (65) fait un angle aigu par rapport à l'axe (69) de l'implant, qui est adapté à la situation axiale (68) d'une couronne dentaire posée en oblique sur le corps d'implant.

18. Implant selon la revendication 17, caractérisé en ce que le prolongement (66) du corps de contact (65) est réalisé sous forme de corps de friction (70) en saillie vers le haut, coaxialement par rapport à l'axe (68) de la couronne dentaire, partant de la face frontale (67) du corps de contact (65), qui est ouvert dans la direction de l'axe (69) de l'implant.
